# EUROPEAN PATENT SPECIFICATION

(11) **EP 4 238 802 B1**
(45) Date of publication and mention of the grant of the patent: **30.04.2025**
(21) Application number: 23155288.6
(22) Date of filing: 07.02.2023
(51) Int. Cl.: B60K 17/24, B60K 17/36

(54) **IMPROVED TORQUE DISTRIBUTOR SYSTEM AMONG AXLES OF A HEAVY VEHICLE**
VERBESSERTES DREHMOMENTVERTEILUNGSSYSTEM ZWISCHEN ACHSEN EINES SCHWERLASTFAHRZEUGS
SYSTÈME DE DISTRIBUTION DE COUPLE AMÉLIORÉ ENTRE ESSIEUX DE VÉHICULE LOURD

(30) Priority: 09.02.2022 IT 202200002345
(43) Date of publication of application: 06.09.2023
(73) Proprietor: IVECO S.P.A., 10156 Torino (IT)
(72) Inventor: PEREIRA DE LEMOS, Josè Francivaldo, 10156 TORINO (IT)
(74) Representative: Studio Torta S.p.A.

(56) References cited:
- EP-A1- 3 647 097
- CN-A- 105 584 357
- CN-A- 112 413 079

## Description

### TECHNICAL SECTOR

This invention relates to a torque distributor system for a heavy vehicle.

This invention finds a preferred, though not exclusive, application in the distribution of torque among axles of a heavy vehicle, such as a lorry. This application will be referred to below by way of example.

### PRIOR ART

Heavy vehicles comprise, as known, a propulsion unit configured to provide torque to one or more of the vehicle's axles. One example of this propulsion unit may be an internal combustion engine, a fuel cell engine, or an electric or hybrid motor unit.

In particular, the torque is distributed via a transmission to one or more axles of the vehicle, as known. In any case, this transmission is specifically designed for an individual traction configuration.

Thus, if you wish to change the traction mode from single or multiple axles, it is necessary to redesign the transmission.

In addition, the current transmissions are particularly bulky and heavy if they need to divide the torque to multiple axles.

Known transmission arrangements are disclosed in publications CN112413079 A, CN105584357A or EP3647097 A1.

The need is, thus, felt to provide a system for distributing torque from one power generator of a vehicle to one or more axles that is versatile, compact, and economical.

The purpose of this invention is to meet the needs outlined above in an optimal and inexpensive way.

### SUMMARY OF THE INVENTION

The above-mentioned purpose is achieved with a torque distributor system as claimed in the attached claims.

### BRIEF DESCRIPTION OF THE DRAWINGS

For a better understanding of this invention, a preferred embodiment is described below by way of non-limiting example and with reference to the accompanying drawings, wherein:
- Figure 1 is a schematic view of a power generator system for a heavy vehicle used in a configuration with two driving axles that is not part of the present invention but useful for its understanding;
- Figure 2 is a cross-section view of a distributor system according to the configuration in Figure 1;
- Figure 3 is a schematic view of a power generator system for a heavy vehicle used in a configuration with three driving axles that is not part of the present invention but useful for its understanding;
- Figure 4 is a cross-section view of a distributor system according to the configuration in Figure 3;
- Figure 5 is a schematic view of a power generator system for a heavy vehicle used in a configuration with three driving axles according to the invention; and
- Figure 6 is a cross-section view of a distributor system according to the configuration in Figure 5.

### DETAILED DESCRIPTION OF THE INVENTION

The attached figures schematically illustrate a propulsion unit 1 configured to transmit torque through a mechanical chain to multiple axles 2a, 2b, 2c, and 2d of a heavy vehicle (not illustrated), such as a tractor or lorry.

The propulsion unit 1 may be an internal combustion engine, a fuel cell system, or a hybrid drive system as known in the art.

The propulsion unit 1 is connected to at least one axle via a transmission 3, designed to select a specific gearbox, multiple rotating shafts 4a, 4b, 4c, 4d, and a torque distributor system 5 according to the invention.

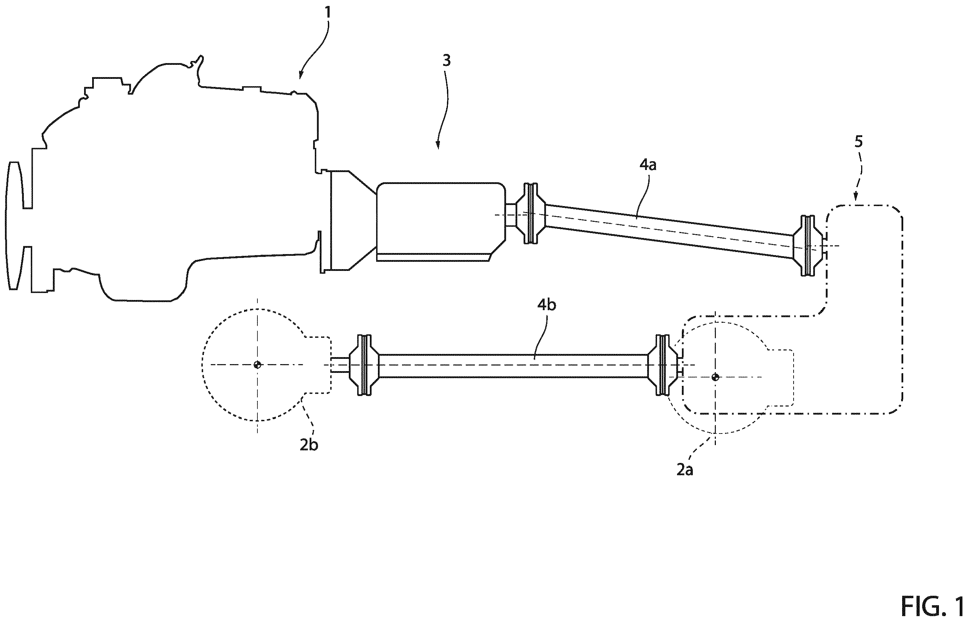

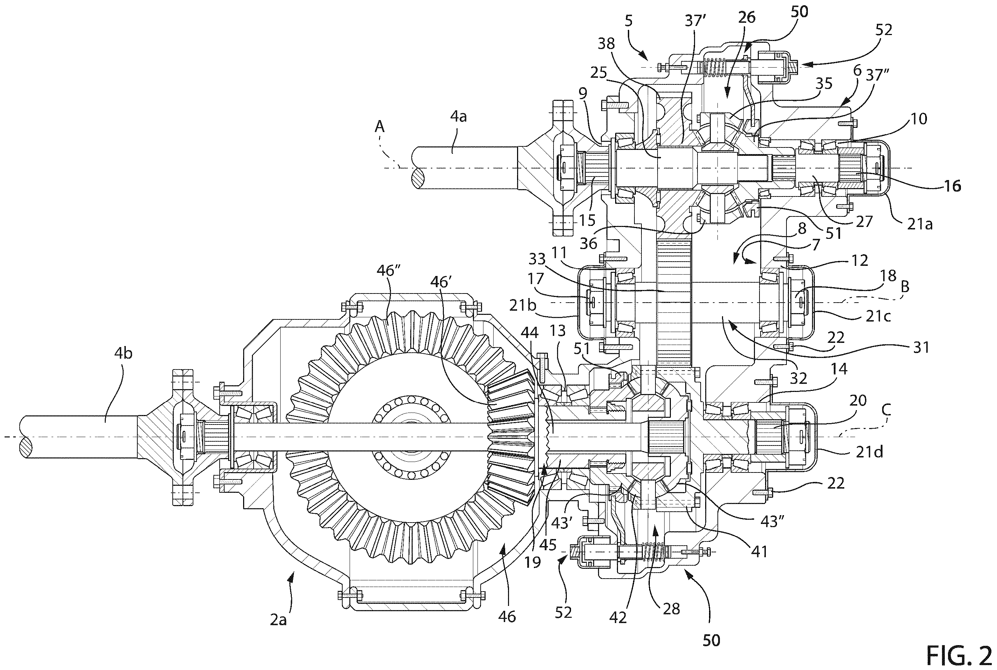

Figures 1 and 2 illustrate a configuration with two driving axles 4a, 4b where the torque distributor 5 is connected by a first rotating shaft 4a to the propulsion unit 1, in the case described via the transmission 3, and where a first axle 4a is connected by a second rotating shaft 4b.

Referring to Figure 2, the torque distributor 5 comprises a casing 6 designed to be supported by a portion fixed to the vehicle's chassis (not illustrated) defining a space 7 and a transmission assembly 8 housed inside the space 7.

Clearly, the casing 6 is advantageously constructed from several parts firmly connected together in order to enable the assembly of the transmission assembly 8 in the space 7.

The casing 6 defines multiple openings 9, 10, 11, 12, 13, 14 configured to enable the passage of respective power take-offs 15, 16, 17, 18, 19, 20 as better described below, connected together by the transmission 8.

More specifically, the distributor system 5 defines six openings and respective power take-offs, preferably in pairs coaxial between them. In particular, the first and second opening 9, 10 and the first and second power take-off 15, 16 are coaxial to an axis A, the third and the fourth openings 11, 12 and the third and fourth power take-offs 17, 18 are coaxial to an axis B and the fifth and the sixth openings 13, 14 and the fifth and sixth power take-offs 19, 20 are coaxial to an axis C.

The axes A, B, and C are, advantageously, parallel to each other and, even more preferably, are parallel to a longitudinal axis of the vehicle.

In the embodiment in Figure 2, where there are two drive axles, two power take-offs 15, 19 communicate with the external environment while four power take-offs 16, 17, 18, 20 are separate from the external environment via covers 21a, 21b, 21c, 21d fixed to the casing 6 via connection means 22, such as threaded parts.

In particular, in the embodiment described, the rotating shaft 4a is connected to the power take-off 15, and the power take-off 19 is connected to the axle 2a and to the axle 2b, as described below, via the transmission 8.

The transmission 8 essentially comprises a first support shaft 25 connected to the first power take-off 15, in the case described firmly fixed to it; this first support shaft 25 is connected via a first differential mechanism 26 to a second support shaft 27. The support shaft 27, in the case described, is firmly fixed to the second power take-off 16.

The first support shaft 25 is also operationally connected to the fifth and to the sixth power take-off 19, 20 via a second differential mechanism 28. In particular, the first support shaft 25 is connected to the second differential mechanism 28 via a reduction module 31.

Specifically, the reduction module 31 comprises a rotating shaft 32 supported rotationally free by the casing 6 and advantageously connected to the third and fourth power take-offs 17, 18, for example firmly connected to them. The rotating shaft 32 supports at least one toothed wheel 33, in the case described a toothed wheel 33 configured to mesh with the first and second differential mechanism 27, 28.

More specifically, the first differential mechanism 27 comprises a gear train 35 configured to connect together multiple planet gears 36 meshing between a pair of gear hubs 37', 37", respectively left and right. In particular, the gear hubs 37', 37'' are cone gear hubs.

Specifically, the left gear hub 37' is connected integrally with the rotation of the support shaft 25 and is configured to also define an additional toothing 38 configured to cooperate with the reduction module 31, i.e., with the toothed wheel 33 described above.

The right gear hub 37" is, instead, advantageously, firmly connected to the second support shaft 27 and, thus, second power take-off 16.

Referring to the second differential mechanism 28, it comprises a gear train 41 operationally connected to the sixth power take-off 20, supported rotationally free by the casing 6, and configured to drag multiple planet gears 42 meshing with a pair of hubs 43', 43", respectively left and right. In particular, the gear hubs 43', 43" are cone gear hubs and, preferably, the sixth power take-off 20 is firmly carried by the gear train 41.

In particular, the right hub 43" is connected to a connecting shaft 44 configured to be connected with the rotating shaft 4b to bring the torque to the axle 4b via the fifth power take-off 19. In particular, the connecting shaft 44 is housed inside the differential mechanism 28, i.e., it passes coaxially to the rotation axis of the planet gears 42.

On the other hand, the left hub 43' is firmly connected to a connecting shaft 45 configured to be connected with the axle 4a.

In particular, the connection of the shaft 45 (and, similarly, even if not illustrated of the shaft 44) is made via a gear 46 between the connecting shaft 45 and the semiaxes (not visible) of the axle 2a. In the particular case illustrated, the gear 46 comprising a first toothed wheel 46' firmly connected to the connecting shaft 45 and a second toothed wheel 46'' operationally connected to the semiaxes of the axle 2a. Advantageously, these toothed wheels 46', 46" are conical toothed wheels.

The connecting shaft 45 is preferably coaxial and supported by the casing 6 around the connecting shaft 44 of the right hub 43".

The transmission 8 also comprises locking means 50 configured to lock the first or second differential mechanism 27, 28. In particular, the locking means 50 are housed in the space 7.

To greatly summarise, the locking means 50 comprise a sleeve 51 driven by actuator means 52 and configured to cooperate in contact with a differential element 27, 28 to lock the operation thereof, i.e., to make each of its elements rotate at the same speed.

In the embodiment illustrated, the locking means 50 for the first differential mechanism 27 comprise a sleeve 51 that can move so as to assume a first condition in which it does not cooperate with the gear train 35 and a second condition in which it cooperates with the gear train 35 to make it selectively integral with the casing.

Instead, the locking means 50 for the second differential mechanism 28 comprise a sleeve 51 that can move so as to assume a first condition in which it does not cooperate with the gear train 41 but cooperates, integrally with the rotation with the left hub 43' and a second condition in which it cooperates with the gear train 41 to make it selectively integral with the rotation with the left hub 43' .

The actuator means 52 illustrated here are advantageously pneumatic, i.e., they comprise a piston that can be driven with compressed air and kept in the position to unlock the differential via elastic means, which are not described further for the sake of brevity.

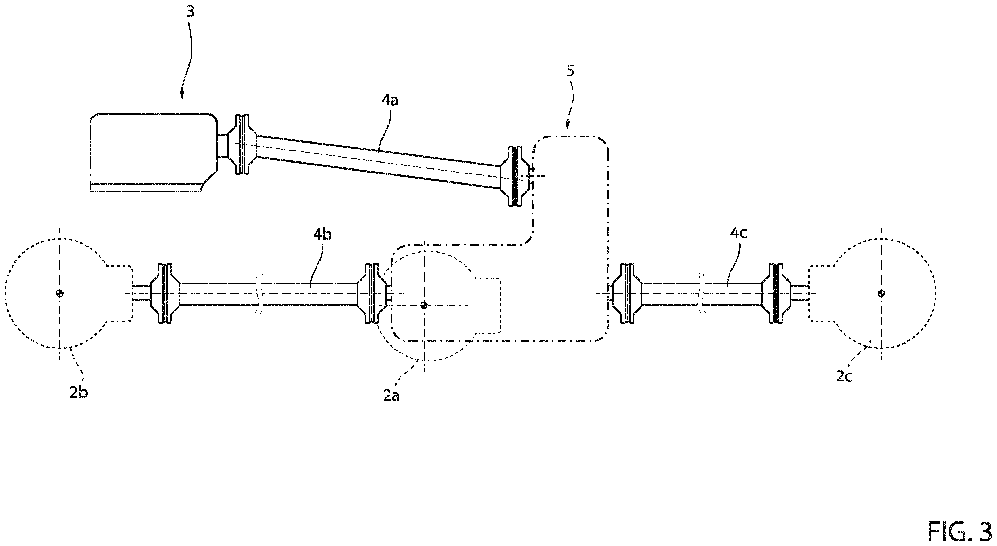

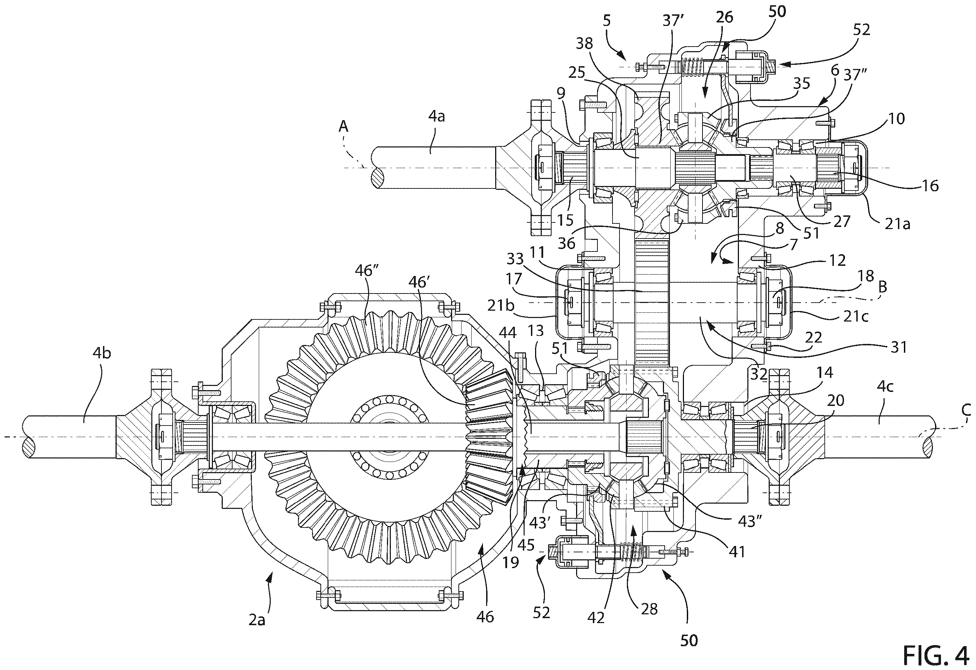

In the embodiment of Figures 3 and 4, the vehicle comprises three driving axles 2a, 2b, and 2c. As a result, in relation to the embodiment in Figures 1 and 2, the sixth power take-off 20 is connected to a third rotating shaft 4c that connects the transmission 8 to the third axle 2c. The third rotating shaft 4c can be connected with the semiaxes of the third axle 2c using a gear similar to the gear 46 described above.

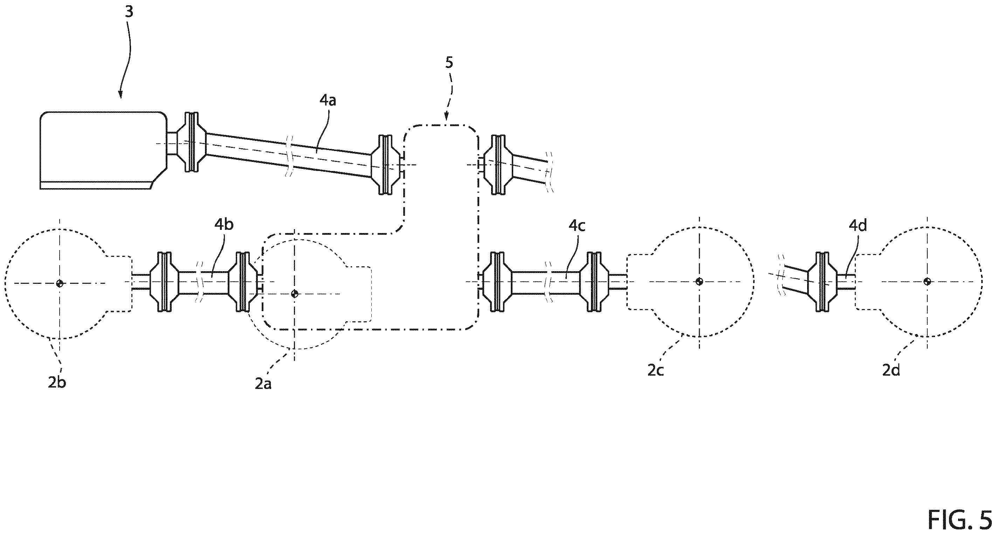

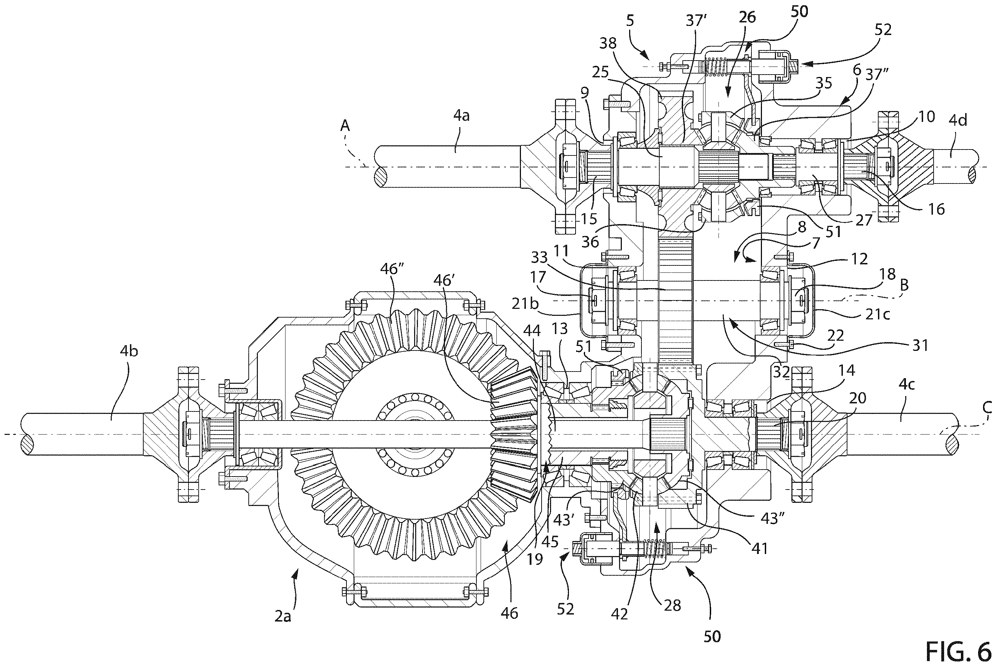

In the embodiment of Figures 5 and 6, the vehicle comprises four driving axles 2a, 2b, 2c, and 2d. As a result, in relation to the embodiment in Figures 1 and 2, the sixth power take-off 20 is connected to a third rotating shaft 4c that connects the transmission 8 to the third axle 2c and the second power take-off 16 is connected to a fourth rotating shaft 4d that connects the transmission 8 to the fourth axle 2d. The third and fourth rotating shafts 4c, 4d can be connected with the semiaxes of the third and fourth axles 2c, 2d using corresponding gears similar to the gear 46 described above.

In all three embodiments, the third and fourth power take-offs 17, 18 can be used for other purposes, like the connection of electric machines (not illustrated) that could be connected directly to the casing 7 or via a gear to the above-mentioned power take-offs 17, 18 to provide additional torque or generate electricity. Equally, the third and fourth power take-offs 17, could be connected to devices designed to use the drive torque for other purposes, such as support equipment for the vehicle's operation, such as hydraulic pumps or motors.

The operation of the embodiments described above is as follows.

In the embodiment in Figures 1 and 2, the torque generated by the power generator 1 is transmitted through the rotating shaft 4a to the first power take-off 15 to the first support shaft 25. Here, the torque passes to the reduction module 31 and is transferred to the second differential mechanism 28. The first support shaft 25 also provides torque to the first differential mechanism that rotates idly. In particular, the torque is transferred between the toothing 38 and the toothed wheel 33, which meshes with the gear train 41 and rotates it. The gear train 41 drags the planet gears 42 that rotate the hubs 43' and 43" that rotate the corresponding connecting shafts 44 and 45. These latter rotate, via corresponding gears 46, the semiaxes of the first and second axles 2a, 2b. The gear train 41 and the shaft 32, rotating, bring with them the respective power take-offs 17, 18, and 20 that rotate idly. Thanks to the differential mechanism 28, the connecting shafts 44, 45 may have different rotation speeds compared to each other.

If necessary, the locking means 50 may be activated to lock the gear train 41, and, thus, the sixth power take-off 20, compared to the left hub 43'. In this way, both the connecting shafts 44, 45 rotate at the same speed, dragging, without differences in speed, the semiaxes of the axles 2a, 2b.

In the embodiment in Figures 3 and 4, the sixth power take-off is connected via the third rotating shaft 4c to a third driving axle 2c and the torque provided according to what was discussed beforehand to the gear train 41 is provided to the semiaxes of the third axle 2c. If the locking means 50 lock the gear train 41 to the left hub 43', all three connecting shafts would rotate at the same speed.

In the embodiment in Figures 5 and 6, the sixth power take-off is connected via the third rotating shaft 4c to a third driving axle 2c and the torque provided according to what was discussed beforehand to the gear train 41 is provided to the semiaxes of the third axle 2c. If the locking means 50 lock the gear train 41 to the left hub 43', all three connecting shafts 4a, 4b, 4c would rotate at the same speed. In addition, the second power take-off is connected via the fourth rotating shaft 4d to a fourth driving axle 2d that rotates, thanks to the first differential mechanism 26 at a different speed compared to that of the other rotating shafts 4a, 4b, 4c. In this case too, the locking means 50 may be activated to firmly attach the gear train 35 to the casing 6 so as to have the same torque at output towards the second differential mechanism 28 and towards the fourth rotating shaft 2d. Arranging, as a result, the relationships between the reduction module 31 and the second differential mechanism 28, it is possible to rotate, if both the locking means are activated, at the same speed.

In all the embodiments, part of the torque may be used connecting the third and/or fourth power take-off 17, 18 to a system using the vehicular torque for other purposes. Similarly, the third and/or fourth power take-off 17, 18 could be connected to electric machines and/or other systems that use or provide torque to interact with the transmission 8.

From the above, the advantages of a torque distributor system according to the invention are clear.

The distributor system proposed makes it possible to distribute, in a versatile way, to different axles of a vehicle, making it possible to obtain different vehicle driving axle configurations with the same system.

In addition, the distributor system proposed makes it possible to connect electric machines for additional support/use of the torque provided by the power generator, or devices to use this torque to the same system.

Thus, the distributor system according to the invention is particularly versatile, i.e., it is suitable for a large variety of purposes, reducing the costs of manufacturing and enabling a lot of vehicle customisation.

In addition, the fact that the transmission is housed inside a single space and the fact that the power take-offs can be isolated when not used, increases the service life of the transmission.

The use of more differentials also makes it possible to have axles with equal traction that can be used in the conditions required by specific loading and/or ground situations.

Finally, it is clear that changes may be made to the torque distributor system, and variations produced thereto, according to this invention that, in any case, do not depart from the scope of protection defined by the claims.

Clearly, additional mechanical elements not described for brevity may be included.

The reduction module 31 and the differential mechanisms 26, 28 or the locking means 50 may comprise different kinds of elements.

## Claims

1. A torque distributor system (5) for distributing the torque coming from a power generator (1) of a vehicle to a plurality of axles (2a, 2b, 2c, 2d) of said vehicle,
said distributor system (5) comprising a casing (6) adapted to define a space (7) configured to house a transmission (8), said casing (6) defining a plurality of openings (9, 10, 11, 12, 13, 14) configured to house respective power take offs (15, 16, 17, 18, 19, 20) connected to each other by said transmission (8), a first power take off (15) of said power take offs 15, 16, 17 , 18, 19, 20) being connectable to said power generator (1) and at least a second (19) of said power take-offs (15, 16, 17, 18, 19, 20) being connectable to one or more of said axles (2a, 2b, 2c, 2d), wherein said transmission (8) comprises a differential mechanism (28) operatively interposed between said first and said second power take-off (15, 19), said second power take-off (19) comprising a pair of connecting shafts (44, 45) connected to respective outputs of said differential mechanism (28),
said system comprising a third power take-off (20) connectable to a third axle (2c) of said vehicle, said third power take-off (20) being operatively connected to a gear train (41) of said mechanism differential (28) and a fourth power take-off (16), said transmission (8) comprising a further differential mechanism (26) operatively interposed between said first and fourth power take-offs (15, 16).

2. The system according to claim 1, wherein said third power take-off (20) is coaxial along a first axis (C) to said second power take-off (19).

3. The system according to claim 1, wherein said fourth power take-off (16) is coaxial along a second axis (A) to said first power take-off (15).

4. The system according to one of claims 1 to 3, wherein said differential mechanism (28) is operatively connected to said further differential mechanism (26) by means of a reduction stage (31).

5. The system according to one of the previous claims, wherein said transmission (8) comprises a reduction stage (31) operatively interposed between said first power take-off (15) and said second power take-off (19).

6. The system according to claim 5, wherein the carrier (35) of said differential mechanism (26) is connected via said reduction stage (31) to said further differential mechanism (28).

7. The system according to one of the previous claims, further comprising a third power take-off (17) operatively interposed between said first and second power take-offs (15, 19), said third power take-off (17) being connectable to a further driving source or a device using the torque supplied by said power generator (1).

8. The system according to one of claims 2 to 7, wherein said fourth power take-off (18) is connectable to a further driving source or a device using the torque supplied by said power generator (1).

9. The system according to claims 7 and 8, in which said third and said fourth power take-off (17) are coaxial to each other along a third axis (B).

10. The system according to claim 7 and 8 or 9, when dependent on claims 5 or 6, in which said third and said fourth power take-off (17) are carried by a support shaft (32) of said reduction stage (31).

11. The system according to claims 2, 3 or 9, in which said axes (A, B, C) are parallel to a longitudinal axis of said vehicle.

12. The system in any one of the preceding claims, wherein each axle (2a, 2b, 2c, 2d) comprises a gear (16) operatively connected to the respective power take-off (19, 20, 16).

13. The system according to any one of the preceding claims, wherein said transmission (8) comprises locking means (50) for locking said differential mechanisms (26, 28).

14. The system according to claim 13, wherein said locking means (50) comprise a sleeve (51) and actuator means (52) configured to move said sleeve (51) so as to make said gear train (41) integral with said differential mechanism (28) to one of said connecting shafts (44, 45).

15. The system according to claim 13 or 14, wherein said locking means (50) comprise a sleeve (51) and actuator means (52) configured to move said sleeve so as to make said gear train (35) integral with said further differential mechanism (28) to said casing (6).

16. A vehicle comprising a power generator (1) capable of generating torque, a plurality of axles (2a, 2b, 2c, 2d) and a torque distributor (5) operatively interposed between said power generator (1) and said axles (2a, 2b, 2c, 2d), said torque distributor (5) being made according to one of the preceding claims.

## Patentansprüche

1. Ein Drehmomentverteilersystem (5) zur Verteilung des Drehmoments von einem Kraftgenerator (1) eines Fahrzeugs auf eine Vielzahl von Achsen (2a, 2b, 2c, 2d) des Fahrzeugs,
wobei das Verteilersystem (5) ein Gehäuse (6) umfasst, das ausgeführt ist, einen Raum (7) zu definieren, der zum Einhausen eines Getriebes (8) eingerichtet ist, wobei das Gehäuse (6) mehrere Öffnungen (9, 10, 11, 12, 13, 14) umfasst, die zum Einhausen entsprechender Kraftabtriebe (15, 16, 17, 18, 19, 20), die durch das Getriebe (8) miteinander verbunden sind, eingerichtet sind,
wobei ein erster Kraftabtrieb (15) der Kraftabtriebe (15, 16, 17, 18, 19, 20) mit dem Kraftgenerator (1) verbindbar ist, und wobei mindestens ein zweiter Kraftabtrieb (19) der Kraftabtriebe (15, 16, 17, 18, 19, 20) mit einer oder mehreren der Achsen (2a, 2b, 2c, 2d) verbindbar ist, wobei das Getriebe (8) einen Differentialmechanismus (28) umfasst, der operativ zwischen dem ersten und dem zweiten Kraftabtrieb (15, 19) angeordnet ist, wobei der zweite Kraftabtrieb (19) ein Paar Verbindungswellen (44, 45) umfasst, die mit jeweiligen Ausgängen des Differentialmechanismus (28) verbunden sind,
wobei das System einen dritten Kraftabtrieb (20), der mit einer dritten Achse (2c) des Fahrzeugs verbindbar ist, umfasst, wobei der dritte Kraftabtrieb (20) operativ mit einem Zahnradtrieb (41) des Differentialmechanismus (28) und einem vierten Kraftabtrieb (16) verbunden ist, wobei das Getriebe (8) einen weiteren Differentialmechanismus (26), der operativ zwischen dem ersten und dem vierten Kraftabtrieb (15, 16) angeordnet ist, umfasst.

2. Das System nach Anspruch 1, wobei der dritte Kraftabtrieb (20) koaxial entlang einer ersten Achse (C) des zweiten Kraftabtriebs (19) angeordnet ist.

3. Das System nach Anspruch 1, wobei der vierte Kraftabtrieb (16) koaxial entlang einer zweiten Achse (A) des ersten Kraftabtriebs (15) angeordnet ist.

4. Das System nach einem der Ansprüche 1 bis 3, wobei der Differentialmechanismus (28) operativ mit dem weiteren Differentialmechanismus (26) durch ein Untersetzungsmodul (31) verbunden ist.

5. Das System nach einem der vorhergehenden Ansprüche, wobei das Getriebe (8) ein Untersetzungsmodul (31) umfasst, das operativ zwischen dem ersten Kraftabtrieb (15) und dem zweiten Kraftabtrieb (19) angeordnet ist.

6. Das System nach Anspruch 5, wobei der Getriebezug (35) des Differentialmechanismus (26) über das Untersetzungsmodul (31) mit dem weiteren Differentialmechanismus (28) verbunden ist.

7. Das System nach einem der vorhergehenden Ansprüche, weiter umfassend ein dritter Kraftabtrieb (17) der operativ zwischen dem ersten und zweiten Kraftabtrieb (15, 19) angeordnet ist, wobei der dritte Kraftabtrieb (17) mit einer weiteren Antriebsquelle oder einer Vorrichtung, die das von dem Kraftgenerator (1) zur Verfügung gestellte Drehmoment nutzt, verbindbar ist.

8. Das System nach einem der Ansprüche 2 bis 7, wobei der vierte Kraftabtrieb (18) mit einer weiteren Antriebsquelle oder einem Gerät verbindbar ist, das das von dem Kraftgenerator (1) zur Verfügung gestellte Drehmoment nutzt.

9. Das System nach Anspruch 7 und 8, wobei der dritte und der vierte Kraftabtrieb (17, 18) koaxial zueinander entlang einer dritten Achse (B) angeordnet sind.

10. Das System nach Anspruch 7, 8 oder 9, wenn diese von Anspruch 5 oder 6 abhängen, wobei der dritte und der vierte Kraftabtrieb (17) von einer Stützwelle (32) des Untersetzungsmoduls (31) getragen werden.

11. Das System nach den Ansprüchen 2, 3 oder 9, wobei die Achsen (A, B, C) parallel zu einer Längsachse des Fahrzeugs verlaufen.

12. Das System nach einem der vorhergehenden Ansprüche, wobei jede Achse (2a, 2b, 2c, 2d) ein Zahnrad (16) umfasst, das operativ mit dem jeweiligen Kraftabtrieb (19, 20, 16) verbunden ist.

13. Das System nach einem der vorhergehenden Ansprüche, wobei das Getriebe (8) Blockiermittel (50) zum Blockieren der Differentialmechanismen (26, 28) umfasst.

14. Das System nach Anspruch 13, wobei die Verriegelungsmittel (50) eine Hülse (51) und Betätigungsmittel (52) umfassen, die ausgeführt sind, die Hülse zu bewegen, um den Zahnradtrieb (41) einteilig mit dem Differentialmechanismus (28) zu einer der Verbindungswellen (44, 45) zu verbinden.

15. Das System nach Anspruch 13 oder 14, wobei die Verriegelungsmittel (50) eine Hülse (51) und Betätigungsmittel (52) umfassen, die ausgeführt sind, die Hülse zu bewegen, um den Zahnradtrieb (35) einteilig mit dem weiteren Differentialmechanismus (28) zu dem Gehäuse (6) zu verbinden.

16. Ein Fahrzeug, das einen Kraftgenerator (1), der ausgeführt ist, ein Drehmoment zu erzeugen, eine Vielzahl von Achsen (2a, 2b, 2c, 2d) und einen Drehmomentverteiler (5) umfasst, der operativ zwischen dem Kraftgenerator (1) und den Achsen (2a, 2b, 2c, 2d) angeordnet ist, wobei der Drehmomentverteiler (5) gemäß einem der vorhergehenden Ansprüche hergestellt ist.

## Revendications

1. Système de distribution de couple (5) pour distribuer le couple venant d'un générateur de puissance (1) d'un véhicule à une pluralité d'essieux (2a, 2b, 2c, 2d) dudit véhicule,
ledit système de distribution (5) comprenant un carter (6) adapté pour définir un espace (7) configuré pour loger une transmission (8), ledit carter (6) définissant une pluralité d'ouvertures (9, 10, 11, 12, 13, 14) configurées pour loger des prises de force (15, 16, 17, 18, 19, 20) respectives raccordées les unes aux autres par ladite transmission (8), une première prise de force (15) desdites prises de force (15, 16, 17, 18, 19, 20) pouvant être raccordée audit générateur de puissance (1) et au moins une deuxième (19) desdites prises de force (15, 16, 17, 18, 19, 20) pouvant être raccordée à un ou plusieurs desdits essieux (2a, 2b, 2c, 2d), dans lequel ladite transmission (8) comprend un mécanisme différentiel (28) interposé de manière fonctionnelle entre ladite première et ladite deuxième prise de force (15, 19), ladite deuxième prise de force (19) comprenant une paire d'arbres de raccordement (44, 45) raccordés à des sorties respectives dudit mécanisme différentiel (28),
ledit système comprenant une troisième prise de force (20) pouvant être raccordée à un troisième essieu (2c) dudit véhicule, ladite troisième prise de force (20) étant raccordée de manière fonctionnelle à un train d'engrenages (41) dudit mécanisme différentiel (28) et une quatrième prise de force (16), ladite transmission (8) comprenant un autre mécanisme différentiel (26) interposé de manière fonctionnelle entre lesdites première et quatrième prises de force (15, 16).

2. Système selon la revendication 1, dans lequel ladite troisième prise de force (20) est coaxiale le long d'un premier axe (C) par rapport à ladite deuxième prise de force (19).

3. Système selon la revendication 1, dans lequel ladite quatrième prise de force (16) est coaxiale le long d'un deuxième axe (A) par rapport à ladite première prise de force (15).

4. Système selon l'une quelconque des revendications 1 à 3, dans lequel ledit mécanisme différentiel (28) est raccordé de manière fonctionnelle audit autre mécanisme différentiel (26) au moyen d'un étage de réduction (31).

5. Système selon l'une quelconque des revendications précédentes, dans lequel ladite transmission (8) comprend un étage de réduction (31) interposé de manière fonctionnelle entre ladite première prise de force (15) et ladite deuxième prise de force (19).

6. Système selon la revendication 5, dans lequel le porteur (35) dudit mécanisme différentiel (26) est raccordé par le biais dudit étage de réduction (31) audit autre mécanisme différentiel (28).

7. Système selon l'une quelconque des revendications précédentes, comprenant ultérieurement une troisième prise de force (17) interposée de manière fonctionnelle entre lesdites première et deuxième prises de force (15, 19), ladite troisième prise de force (17) pouvant être raccordée à une autre source d'entraînement ou un dispositif au moyen du couple amené par ledit générateur de puissance (1).

8. Système selon l'une quelconque des revendications 2 à 7 dans lequel ladite quatrième prise de force (18) peut être raccordée à une autre source d'entraînement ou un dispositif au moyen du couple amené par ledit générateur de puissance (1).

9. Système selon la revendications 7 et 8 dans lequel ladite troisième et ladite quatrième prise de force (17) sont coaxiales l'une par rapport à l'autre le long d'un troisième axe (B).

10. Système selon les revendications 7 et 8 ou 9, lorsqu'elle dépend des revendications 5 ou 6, dans lequel ladite troisième et ladite quatrième prise de force (17) sont portées par un arbre de support (32) dudit étage de réduction (31).

11. Système selon les revendications 2, 3 ou 9, dans lequel lesdits axes (A, B**,** C) sont parallèles à un axe longitudinal dudit véhicule.

12. Système selon l'une quelconque des revendications précédentes, dans lequel chaque essieu (2a, 2b, 2c, 2d) comprend un engrenage (16) raccordé de manière fonctionnelle à la prise de force (19, 20, 16) respective.

13. Système selon une des revendications précédentes, dans lequel ladite transmission (8) comprend des moyens de verrouillage (50) pour verrouiller lesdits mécanismes différentiels (26, 28).

14. Système selon la revendication 13, dans lequel lesdits moyens de verrouillage (50) comprennent un manchon (51) et des moyens d'actionnement (52) configurés pour déplacer ledit manchon (51) de manière à rendre ledit train d'engrenages (41) solidaire dudit mécanisme différentiel (28) par rapport à un desdits arbres de raccordement (44, 45).

15. Système selon la revendication 13 ou 14, dans lequel lesdits moyens de verrouillage (50) comprennent un manchon (51) et des moyens d'actionnement (52) configurés pour déplacer ledit manchon de manière à rendre ledit train d'engrenages (35) solidaire dudit autre mécanisme différentiel (28) par rapport audit carter (6).

16. Véhicule comprenant un générateur de puissance (1) apte à générer un couple, une pluralité d'essieux (2a, 2b, 2c, 2d) et un distributeur de couple (5) interposé de manière fonctionnelle entre ledit générateur de puissance (1) et lesdits essieux (2a, 2b, 2c, 2d), ledit distributeur de couple (5) étant réalisé selon l'une quelconque des revendications précédentes.
